(19) **Europäisches Patentamt European Patent Office Office européen des brevets**

(11) **EP 4 356 353 B1**

(12) **EUROPEAN PATENT SPECIFICATION**

(45) Date of publication and mention of the grant of the patent:
**18.02.2026 Bulletin 2026/08**

(21) Application number: **21756002.8**

(22) Date of filing: **10.08.2021**

(51) International Patent Classification (IPC):
**G06V 10/70** *(2022.01)*

(52) Cooperative Patent Classification (CPC):
**G06F 18/217;** G06V 10/82

(86) International application number:
**PCT/EP2021/072224**

(87) International publication number:
**WO 2023/016629 (16.02.2023 Gazette 2023/07)**

(54) **METHOD AND ELECTRONIC PROCESSOR CIRCUIT FOR SELECTING A SET OF TRAINING FRAMES FROM A PLURALITY OF GIVEN FRAMES IN AN ACTIVE LEARNING PROCESS AND COMPUTER-READABLE STORAGE MEDIUM**

VERFAHREN UND ELEKTRONISCHE PROZESSORSCHALTUNG ZUR AUSWAHL EINES SATZES VON TRAININGSRAHMEN AUS EINER VIELZAHL VON GEGEBENEN RAHMEN IN EINEM AKTIVEN LERNPROZESS UND COMPUTERLESBARES SPEICHERMEDIUM

PROCÉDÉ ET CIRCUIT DE PROCESSEUR ELECTRONIQUE POUR SELECTIONNER UN ENSEMBLE DE CADRES D'ENTRAINEMENT À PARTIR D'UNE PLURALITÉ DE CADRES DONNÉES DANS UN PROCESSUS D'APPRENTISSAGE ACTIF ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.04.2024 Bulletin 2024/17**

(73) Proprietor: **CARIAD SE 38440 Wolfsburg (DE)**

(72) Inventors:
• **BRUCH, Anton 12049 Berlin (DE)**
• **MONTESI, Alessandro 10245 Berlin (DE)**
• **BENECKE, Gunthard 10179 Berlin (DE)**
• **SILICKI, Artur 10405 Berlin (DE)**

(74) Representative: **Hofstetter, Schurack & Partner Patent- und Rechtsanwaltskanzlei PartG mbB Balanstraße 73 / Haus 31A 81541 München (DE)**

(56) References cited:
**WO-A1-2021/007514    US-B2- 10 748 035**

• **DEEPTHI SREENIVASAIAH ET AL: "MEAL: Manifold Embedding-based Active Learning", ARXIV.ORG, CORNELL UNIVERSITY LIBRARY, 201 OLIN LIBRARY CORNELL UNIVERSITY ITHACA, NY 14853, 22 June 2021 (2021-06-22), XP091046786, DOI: 10.1109/ ICCVW54120.2021.00120**

## Description

The invention is concerned with a method and an electronic processor circuit for selecting a set of training frames from a plurality of given frames of a frame sequence (e.g. a video stream from a camera of an autonomously driving vehicle). The selection is needed for a so-called active learning process. A computer-readable storage medium for storing a software for the electronic processor circuit is also provided.

"Active learning" is a special case of machine learning in which a learning algorithm can interactively query a pre-defined information source to label new data points with the desired outputs (i.e. labels). There are situations in which unlabeled data is abundant but manual labeling is expensive. In such a scenario, learning algorithms can actively query the information source for specific labels that promise to provide the largest improvement for the next training phase. This type of iterative supervised learning is called "active learning".

The invention relates to a method for automatic identifying the most valuable image frames to be labelled. In particular, the idea is related to the field of data annotation for autonomous driving where a plurality of given image frames is available from a frame sequence that is recorded by at least one video camera of the vehicle during different traffic situations or traffic situations.

In the field of autonomous driving, machine learning algorithms are becoming more and more important for performing a great variety of tasks, in particular perception tasks. Examples of those tasks are "semantic segmentation" and "object classification".

In order to be reliable, such machine learning algorithms require a large amount of annotated ("labelled") image data for training. The image data are usually acquired by one or more sensors located on a vehicle. In this description the sensor used can be a (mono)camera or a combination of cameras, but this shall not limit the scope of the invention as defined in the claims. Any data frame from other sensor types, e.g. radar or LiDAR "images", may also form the basis for the described method.

In the case of a video camera, the camera takes images of the vehicle's environment: each frame comprises information on objects like pedestrians, vehicles, bicycles, traffic signs, buildings. In order for the frame to be used as training input in a machine learning algorithm, such objects in each frame should be annotated (manually or automatically).

However, the annotation of objects in a frame is a time-consuming task. Learning algorithms using active learning reduce the number of annotated training examples needed to train a machine learning model (for example, deep learning models), by selecting the most relevant training examples (training frames) from the non-annotated training data and querying an information source only for the annotation of these selected training examples that are deemed to be the most relevant.

US10748035 describes an active learning method wherein un-labelled data are selected which contain an amount of different object types (i.e. pedestrian, traffic signs, different types of vehicle) in one frame. In https://arxiv.org/abs/1901.05954 a method is described for using active learning in an object classification tasks. In https://arxiv.org/pdf/2106.11858 an active learning query strategy within an exploration-exploitation framework for image segmentation is disclosed, wherein informativeness measures, based on entropy sampling, and representative measures, based on clustering methods are combined. Low-dimensional manifold embeddings are extracted from feature vectors of unlabeled data points obtained using UMAP which maintains the structural similarity between the data points in lower dimensions.

One problem of using active learning in connection with video streams provided by autonomous vehicles can be given in the following situation. The autonomous vehicle may generate a video stream providing a sequence of image frames (frame sequence) showing different traffic situations. If in several of these traffic situations the recognition results of a machine learning model indicate a high uncertainty regarding the recognition of objects in the surroundings of the vehicle, a limited number K of these frames should be provided as training frames for improving the machine learning model. However, if, for example, the first traffic situation already comprises K frames where the recognition uncertainty is above a given threshold, only frames showing this first traffic situation will be selected for the active learning process, while remaining frames showing other traffic situations may be omitted, even if the recognition uncertainty may have been equally high. Thus, after the next training phase using the K selected training frames, the machine learning model will still exhibit a high recognition uncertainty for the other traffic situations.

It is an objective of the present invention to provide an efficient active learning process that will provide an adequate selection of training frames from a given sequence of image frames as it might be provided in a video stream of an autonomous vehicle.

The objective is accomplished by the subject matter of the independent claims. Advantageous developments with convenient and non-trivial further developments of the invention are specified in the following description, the dependent claims and the figures.

As one solution the invention provides a method for selecting a set of training frames from a plurality of given frames of a frame sequence (e. g a video stream from an autonomously driving vehicle) in an active learning process. The term "frame" or image frame refers to an image as it might be comprised or contained in a video stream. Such a video stream may be generated by at least one camera of an autonomously driving vehicle. In other words, a video stream is a sequence of images, wherein these images are termed "frames" in the prior art. Additionally or alternatively, a frame can comprise the sensor data of at least one sensor that is different from a camera, e.g. a LiDAR sensor and/or a radar sensor and/or an ultrasonic sensor, just to name examples. For example, a frame from a LiDAR sensor may comprise a point cloud of measurement points. Thus, an "image" of the environment can be a representation of the environment based on measurements points, like, e.g., pixels, LiDAR points, 3D-voxels, just to name examples. The active learning process is the well-known process of selecting those frames from a frame sequence that resulted in a highest recognition uncertainty or in a recognition uncertainty above a predefined threshold when a given pre-trained machine learning model performs an object recognition on the basis of these frames. "Pre-trained" means that the machine learning model is already trained or adapted to perform a recognition step based on frames of the data type that corresponds to the data type of the given frames. Using a pre-trained model is well known in the context of the active learning process.

The method comprises the following steps:

- providing the pre-trained machine learning model;
- performing a respective recognition step for the given frames using the pre-trained model and thereby generating a respective recognition result for each given frame;
- in a pre-selection step calculating a respective uncertainty value for each given frame using the respective recognition result and a predefined uncertainty measure and
- pre-selecting N given frames whose uncertainty values indicate the highest recognition uncertainty and thereby providing an intermediate set of N pre-selected frames.

These steps yield N frames with the highest recognition uncertainty. This type of selection is well-known from active learning processes. However, if only K with K smaller than N (K and N both being whole numbers greater than 0) are to be selected, there is now the risk of choosing K frames that show the same traffic situation whereas in the remaining N - K frames other traffic situations might be shown, where the recognition step also yielded a high recognition uncertainty. Frames showing these remaining traffic situations might thus not be included in the active learning process. In order to avoid this, the following additional selection step is provided. Note that the recognition step need not be entirely identical to a standard deployment of an algorithm for recognition or for so-called inference. Especially, during a standard inference the detections may be thresholded by their confidence, and only high confidence predictions are given out as recognitions (for Object Detection). In the context of the invention, one may be interested in the low confidence predictions or recognitions (uncertain predictions), so the thresholding may be omitted. But the forward pass through the recognizer is used to generate all (low and high confidence) predictions and can therefore be the same as a standard inference. The invention comprises both solutions, i.e. with and without thresholding.

The method is characterized by the following selection step comprising: selecting the set of K training frames from the N pre-selected frames by performing a predefined diversity sampling that comprises determining predefined fingerprint data (one or several values) for the pre-selected frames by applying a predefined fingerprint function to the respective pre-selected frame and selecting K training frames that provide a combination of fingerprint data that fulfills a predefined diversity criterion indicating that the K training frames are dissimilar according to a predefined measure. In other words, the similarity of the K training frames is minimal or at least below a predefined threshold according to the fingerprint data and the predefined measure. One example of the measure comprises that the recording places of the frames are determined and the training frames are dissimilar, if they originate from different recording places or from recording places that have a spatial distance that is greater than a predefined threshold or the K training frames are chosen such that the sum of the spatial distances of the recording places or the sum of the squared spatial distances is maximized. Likewise, a temporal distance of recording times of the frames can be used. Another possible measure comprises that the training frames must belong to different clusters in a predefined feature space. The predefined measure is explained in further detail below.

The selection step may follow the pre-selection step, such that only the N pre-selected frames remain for the "diversity sampling". The term "diversity sampling" refers to the fact that by sampling or selecting K training frames from the remaining N pre-selected frames, the selected K training frames shall present a diverse selection from the N pre-selected frames. The fingerprint data shall indicate the content of respective frame, i.e. they provide a quantity that allows to compare frames and select frames with different content. The skilled person can choose an appropriate fingerprint function, for example a color histogram and/or a low-resolution version of the frame. The fingerprint data can comprise one or several values as will be explained in the following. The diversity sampling means a sub-sampling or selection of a subset from the N pre-selected frames. Ideally, the K training frames are the most "valuable" or promising frames to be labeled in regard of improvement of the recognition performance of the machine learning model. With "most valuable" it is meant that by using these K training frames for labelling and further training the machine learning model, the recognition uncertainty for the whole frame sequence or video stream is minimized under the condition that only K training frames may be used. In other words, repeating the recognition step should results in recognition data that indicate a reduction of the recognition uncertainty. For achieving this, the idea is to choose the most diverse K training frames of the total of N pre-selected frames such that each critical or uncertain recognition situation or traffic situation (or at least K different traffic situations) is considered in the K training frames.

The invention provides the advantage that even if in a frame sequence several recognition situations or traffic situations are shown and for each of the situations a recognition uncertainty arises that is affecting several frames, it is prevented that already one or a few of these traffic situations result in K training frames such that the remaining traffic situations are ignored. Instead, from each traffic situation only one or some training frames (less than K) are selected such that the K training frames are distributed evenly over all the critical or uncertain recognition situations. This will maximize the training effect or the improvement of the machine learning model, if only K training frames shall be used.

The invention also comprises further developments that provide features which afford additional technical advantages.

One development comprises that the fingerprint function comprises that the fingerprint data are generated by calculating recognition features of all N images using an feature extraction backbone encoder or by calculating such recognition features and applying a predefined compression algorithm to the recognition features that is designed to reduce a dimensionality of the recognition features. The "feature extraction backbone encoder" is the specific part of a machine learning model that extracts (from the respective image frame) those features which form the basis for the actual classification of objects in the image frame. Exemplary features that may be extracted by the feature extraction backbone encoder are edges, textures, colors, predefined basic shapes (circles, lines, squares). A feature extraction backbone encoder can be implemented on the basis of the first several layers of a multilayer artificial neural network of a machine learning model. In general, the feature extraction backbone encoder is the part of the machine learning model that provides recognition features without the following step of classification. The feature extraction backbone encoder may comprise all those layers from the input layer to the so-called bottleneck of the artificial neural network. The actual classification can be performed by a second part of the machine learning model that receives the recognition features and performs the actual classification step for deciding or estimating a respective probability value or estimation value for each of the classes of objects that may possibly be recognized by the machine learning model. By applying an additional compression algorithm, the dimensionality of the feature vectors of the recognition features may be reduced, for example, by grouping similar recognition features into one feature group and representing these recognition features by a common feature group such that two different types of recognition features (e.g. similar basic shapes) are represented by only one features group.

An alternative compression algorithm that can be applied to recognition features is the following. One development comprises that the compression algorithm comprises applying a principal component analysis, PCA, to the recognition features and using a pre-defined selection or sub-set of the PCA coefficients as the fingerprint data. Once, the PCA coefficients are available, the dimensionality can be reduced by choosing only a pre-defined part of the PCA coefficients. For example, if the feature extraction backbone encoder provides M recognition features per image frame, by choosing m PCA coefficients of these M recognition features, where m < M (m, M being whole numbers), the dimensionality of the recognition features is reduced. In the case of a PCA, choosing the first PCA coefficients results in the advantage that the most significant recognition features are represented by these fist m PCA coefficients.

One development comprises that the diversity criterion comprises the steps of applying a k-means clustering on the feature data for determining K clusters in a feature space, and selecting from each of the resulting K clusters a respective frame that fulfills a predefined representation criterion. Note that recognition features are a representation of the image content of the respective image frame. By identifying K clusters of these recognition features, the image content of the N pre-selected frames is divided into K clusters or groups. Note that similar image content will result in the same cluster. It can be assumed that similar image content, i.e. image frames from the same cluster, will result in the same recognition uncertainty or will have the same reason for the recognition uncertainty. Thus, by using one representative training frame from each cluster, it is very likely that by training the machine learning model with this training frame the machine learning model will be improved such that it will be able to handle all image frames from that cluster with less recognition uncertainty.

One development comprises that the representation criterion comprises that the pre-selected frame that is closest to the cluster center is chose. Alternatively, the representation criterion comprises that the pre-selected frame with the highest recognition uncertainty in that cluster is chosen. These have been proven to be two beneficial versions of selecting an appropriate training frame from each cluster.

According to present invention, the fingerprint function comprises that the fingerprint data of the respective pre-selected fame comprises a respective geo-position of a recording place of the respective pre-selected frame, and the diversity criterion comprises that the geo-positions of the training frames indicate a spatial distance of the recording places that is larger than a predefined distance threshold and/or the recording places are spatially equidistant. By spreading the selection of K training frames within the N pre-selected frames on the basis of their spatial distance, it can be assured that during a ride or a drive of an autonomous vehicle, image frames from different recording places are chosen such that it is very unlikely that the same traffic scene or traffic situation is shown in the training frames. This increases the likelihood of choosing training frames that have a high or large diversity with regard to the sources of recognition uncertainty.

One development comprises that the fingerprint function comprises that the fingerprint data of the respective pre-selected fames comprise a respective timestamp of a recording time of that pre-selected frame, and the diversity criterion comprises that the timestamps of the training frames indicate a temporal distance of the recording times that is larger than a predefined time threshold and/or the recording times are temporally equidistant. This will spread the selection of the K training frames over the entire frame sequence or video stream.

One development comprises that the recognition result comprises for each given frame at least one probability vector of probability values of a classification output, wherein each probability value indicates a probability of a predefined class being present, and the uncertainty measure comprises calculating the entropy value for each probability vector. The probability values can be so-called softmax values. Like it has already been explained, the actual recognition result that results from the recognition step are based on the recognition features (received from the feature extraction backbone encoder) and they may provide a value or signal for each possible recognition class that may be recognized by the machine learning model. Exemplary classes can be: pedestrian, vehicle, cyclist, traffic sign, road mark. For each class, the probability value may indicate how probable it is that the respective class is contained in a frame or in a bounding box that highlights a specific region in the frame. **If** ten possible classes may be recognized, the recognition result will contain ten probability values, one for each class. Such a probability vector of probability values can be provided for the whole image frame (simply indicating, if a specific class has been recognized somewhere in the image frame) or for specific regions, for example, bounding boxes or even single pixels. The softmax values result from a specific type of algorithms that is well-known in the prior art. By using the probability values of a probability vector, an entropy value can be calculated as the sum of

$$-p_i \cdot \ln( p_i ),$$

where $p_i$ is the respective probability value, e.g. for C possible classes ($i = 1... C$). This has been proven to be a reliable indicator regarding the recognition uncertainty. For example, if no uncertainty is present, one of the probability values $p_i$ will be 1.0 and the remaining probability values will be 0.0, resulting in an entropy value of 0 indicating that no recognition uncertainty is present. In contrast to this, the maximum uncertainty is given, if for C possible classes ($i = 1... C$) and the uncertainty is maximum, this means that $p_i = 1/C$ for each i. Thus, calculating the entropy value of the probability vectors is a reliable quantity for indicating recognition uncertainty.

One development comprises that the uncertainty measure comprises a predefined aggregation function for aggregating the respective entropy value of the at least one probability vector in each given frame. This allows to collect or aggregate the entropy values of the different probability vectors in the case that several probability vectors are provided for a single image frame. Thus, the uncertainty measure is able to describe the recognition uncertainty of a whole frame by using only one single uncertainty value.

One development comprises that the aggregation function comprises calculating the average or the maximum value or the sum of the entropy values of the respective frame. Using the maximum value has proven to be especially beneficial in the case that the classification is based on bounding boxes that identify whole objects. Using the average value or the sum has proven beneficial in the case that a pixel-wise classification output is used.

Accordingly, one development comprises that the pre-trained machine learning model is based on a machine learning algorithm for semantic segmentation, like for example SemSeg, that provides a pixel-wise classification output such that for each pixel of the given image a probability vector is generated. Using semantic segmentation means that for each pixel an individual classification result is provided, e.g. said probability vector of probability values. Semantic segmentation allows to easily implement an aggregation function for providing an uncertainty value for a whole image frame.

One development comprises that the pre-trained machine learning model is based on a machine learning algorithm for class object detection, particularly for multi-class object detection (MCOD) that provides a classification output comprising at least one bounding-box and an associated probability vector. **In** connection with an object detection, in particular a multi class object detection, single objects that have been identified in a frame are marked by a bounding box (rectangular frame with minimum dimensions for touching the object at its contour). **In** connection with object detection, the aggregation function preferably uses the maximum value, i.e. only the bounding box that yields the highest or largest entropy decides or determines the uncertainty value.

One development comprises the further steps of labeling the training frames and performing a training of the pre-trained machine learning model using the labelled training frames. After K training frames have been selected, these training frames can be used as an input for the labelling, which in turn can be implemented manually or automatically (adequate labelling algorithms are known from the prior art). The labelled training frames can be used for a training or updating of the machine learning model using a machine learning algorithm, for example, back-propagation learning.

As a further solution the invention provides an electronic processor circuit or data processing circuit for performing an embodiment of the inventive method, wherein the processor circuit comprises a tangible storage medium comprising computer readable instructions that cause the processor circuit to perform the method when the instructions are executed by the processor circuit. The processor circuit can be provided as a computer or as a network of several computers. The tangible storage medium can be based, for example, on a hard drive or SSD (Solid State Disk) or a USB-stick (Universal Serial Bus), just to name examples.

The processor circuit may comprise a data processing device or a data processing circuit adapted to perform an embodiment of the method according to the invention. For this purpose, the processor circuit may comprise at least one microprocessor and/or at least one microcontroller and/or at least one FPGA (field programmable gate array) and/or at least one DSP (digital signal processor). Furthermore, the processor circuit may comprise program code which comprises computer-readable instructions to perform the embodiment of the method according to the invention when executed by the processor device. The program code may be stored in the data storage of the processor device.

As a further solution the invention provides (tangible and/or non-volatile) data storage medium for the electronic processor circuit, wherein the computer readable medium stores instructions that cause the processor circuit to perform an embodiment of the inventive method when the instructions are executed by the processor circuit. The data storage medium can be used for enabling a computer or a processor circuit to perform an embodiment of the inventive method.

The invention also comprises the combinations of the features of the different embodiments.

In the following an exemplary implementation of the invention is described. The figures show:

Fig. 1    a schematic illustration of an embodiment of the inventive motor vehicle; and

Fig. 2    a schematic illustration of a traffic situation.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

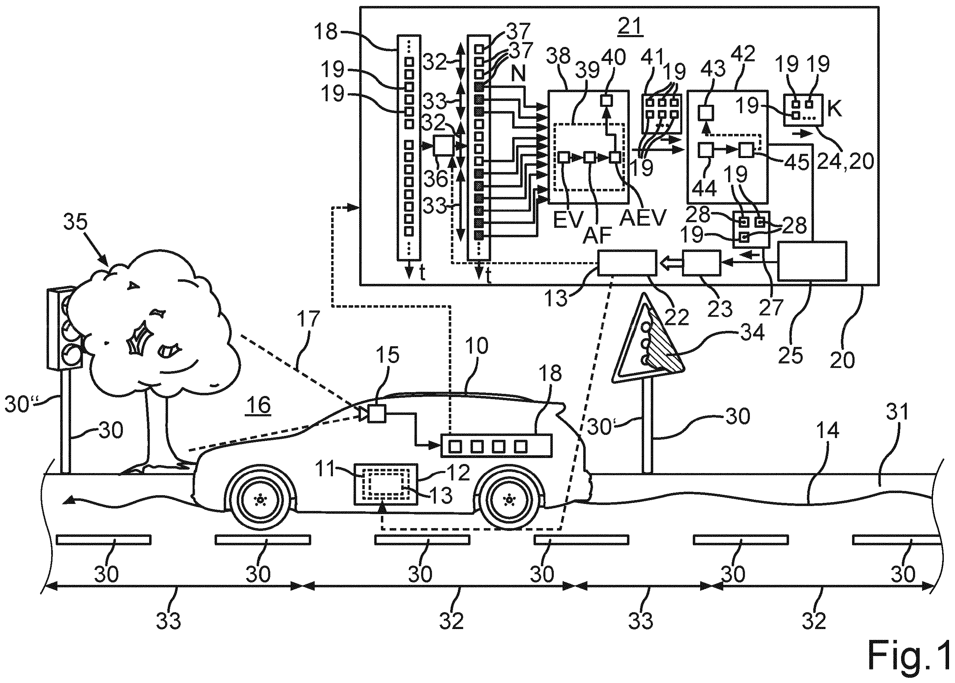

Fig. 1 shows a motor vehicle 10 that can be designed, for example, as a passenger vehicle or a truck. For the vehicle 10, an autonomous driving function 11 shall be developed that may be implemented in an electronic control unit 12 of the vehicle 10. For that autonomous driving function 11, a machine learning model 13 is to be provided.

For training the machine learning model 13, a test drive 14 may be performed with the vehicle 10 and/or with another vehicle, for example, with a prototype vehicle. During the test drive 14, a vehicle sensor 15, for example, a video camera, may observe an environment 16 of the vehicle 10, such that the autonomous driving function 11 can react to the environment 16 for driving or conducting the vehicle 10 using actuators for steering, accelerating und/or braking, as they are known from the prior art. The sensor 15 may provide a detection range 17 that may be directed into the environment 16. During the test drive 14, the sensor 15 may generate a frame sequence 18 of successive image frames 19 showing the sensor data or the environment 16 at different recording times. On the basis of the frame sequence 18, the machine learning model 13 may be trained. The machine learning model 13 may be based, for example, on an artificial neural network, **ANN,** just to name an example. For further training or improving the machine learning model 13, the frame sequence 18 may be provided to a processor circuit 20 that may be provided or operated in the motor vehicle 10 or outside the vehicle 10, for example, in a laboratory.

The frame sequence 18 may show successive images or frames 19 for different recording times t. The machine learning model 13 may be improved on the basis of an active learning process 21 that may be performed by the processor circuit 20. To this end, a pre-trained model 22 of the machine learning model 13 may be provided. For example, a basis training using basic training frames may have already been performed using a training algorithm 23 for training the machine learning model 13 to obtain the pre-trained model 22. The training does not need to be complete or finished yet, i.e. the model 22 is only partially trained and/or further improvement in recognition performance is possible.

From the available new or so far un-used frames 19 for the training, a selection of K training frames 24 is needed such that based on these K selected training frames 24 a labelling 25 may be performed such that labelled training frames 27 are available comprising the training frames 24 and corresponding or associated labelling data 28 indicating which object is shown in the respective training frame 24 or which recognition result the machine learning model 13 should recognize or should classify for that respective training frame 24. Labelling 25 is known from the prior art. Based on the labelled training frames 27, the training algorithm 23 can perform or continue the training using the pre-trained model 22 such that an improvement with regard to classification or recognition performance is obtained.

For selecting the K training frames 24, the following rational is used.

During the test drive 14, different degrees of difficulties regarding the recognition of objects 30 in the environment 16 will result. Exemplary objects can be, for example, markings on a road 31, a traffic sign 30', a traffic light 30", other traffic participants (not shown) just to name examples. Therefore, the test drive 14 will have phases 32, where image frames 19 are generated that can be easily interpreted or classified by the pre-trained model 22 and there will be phases 33 where image frames 19 are generated that result in a comparatively high recognition uncertainty when the pre-trained model 22 is used for image classification or image recognition. Fig. 1 shows as an example that a traffic sign 32 may be difficult to recognize due to dirt 34. Another example can be a traffic light 33 that may be half hidden by an obstacle 35, for example, a tree.

For identifying those image frames 19 that result in the highest recognition uncertainty, the pre-trained model 22 is used in the active learning process 21 for an image classification or object recognition step 36 for generating a respective recognition result 37 for each of the available frames 19. For example, the number of available given frames 19 can be in the range of 500.000 to 5.000.000. From the given frames 19, a pre-selection step 38 may choose those image frames 19 that yield the highest recognition uncertainty. For example, a predefined uncertainty measure 39 may be applied to the recognition result 37 and the N image frames 19 with the corresponding uncertainty values 40 that indicate the largest recognition uncertainty are chosen. The N preselected frames 41 are then known to be those that cause the largest or greatest uncertainty for the pre-trained model 22. These pre-selected frames 41 may be provided to a selection step 42. The selection step 42 is designed to reduce the number of frames used as training frames 24 while at the same time preventing that only frames 19 from one specific phase 33 is used. Instead a diversity criterion 43 is applied such that the chosen K training frames 24 are evenly distributed over all phases 33 that caused recognition uncertainty.

The pre-selection step 38 may comprise calculating the selective uncertainty value 40 on the basis of an accumulated entropy value AEV that may be calculated from entropy values EV using an accumulation function AF.

To this end, for each pre-selected frame 41, a fingerprint function 44 may generate fingerprint data 45 that are used as an input for the diversity criterion 43 to decide which pre-selected frames 41 to choose as training frames 24.

Those K frames 19 that fulfill the diversity criterion 43 are then forwarded or selected as training frames 24 for the labelling 25.

The described active learning process 21 can be iteratively repeated using the same or different frame sequences 18.

The entropy value can be the output of the uncertainty function as uncertainty measure 39.

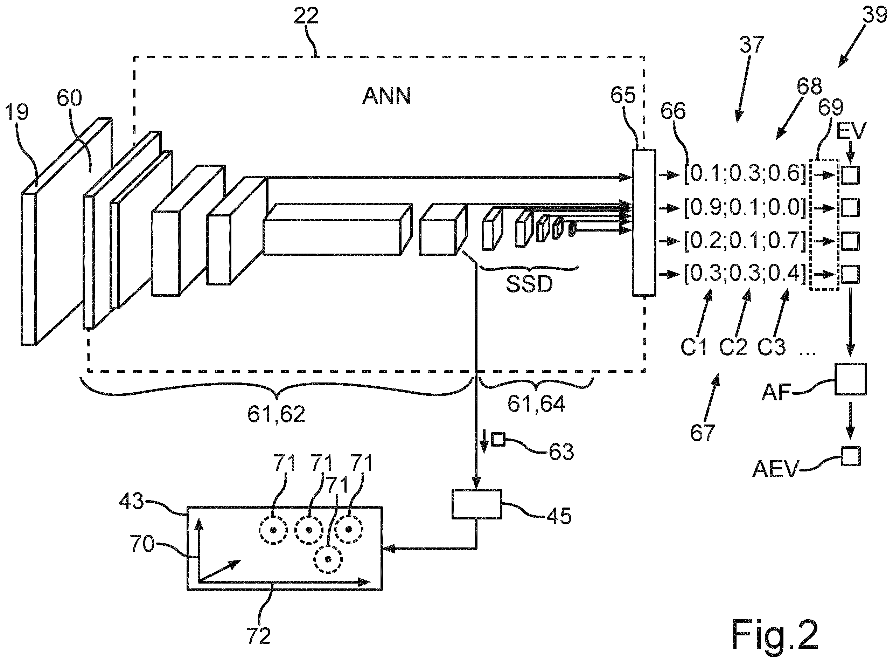

Fig. 2 illustrates both an exemplary implementation of the uncertainty measure 39 and the fingerprint function 44.

Fig. 2 illustrates how an image frame 19 that may show a single image 60 of the frame sequence 18 can be processed on the basis of several layers 61 of an artificial neural network, ANN, of the model 22. The ANN may be structured such that a first set of layers 61 provides a feature extraction backbone encoder 62 that extracts from image pixels of frame 19 predefined recognition features 63. The definition of a feature extraction backbone encoder 62 is well-known from the prior art.

Depending on the type of ANN, model 22 may be designed such that the backbone encoder 62 is followed by, for example, SSD-layers 64 in the case of a single shot detector SSD of an implementation of a multiclass object detection algorithm MCOD. Alternatively, instead of the SSD-layers 64, an implementation of a semantic segmentation may be provided. The final classification output may be provided by a prediction layer 65. For example, the respective recognition result 37 for a frame 19 may comprise probability vectors 66 that may indicate for different classes 67 a probability value 68 how likely it is that an object of the respective class 67 is present in a specific pixel (semantic segmentation -case) or in a specific bounding box (MCOD-case). Fig. 2 shows an exemplary implementation with three classes 67 that are named here as C1, C2, C3. Exemplary classes 67 can be: vehicle, pedestrian, traffic light, traffic sign, road mark, just to name examples. An entropy calculation step 69 may calculate a respective entropy value EV for each probability vector 66. Using the aggregation function AF, a single aggregated entropy value AEF may be calculated from the entropy values EV.

The diversity criterion 43 may comprise that the recognition features 63 or a compressed version of the recognition feature 63 may be provided to a K-means algorithm 70 that may determine K clusters 71 in a feature space 72. From cluster 71, one frame 19 can be chosen as training frame resulting in the required K training frames 24.

The method thus finds the most valuable frames to be labelled for training a machine learning algorithm, especially in semantic segmentation or multi class object detection machine learning algorithms.

Machine learning algorithms or models for semantic segmentation(e.g. SemSeg) take as input an image or frame: as output the algorithm labels each pixel of the input image with a corresponding class of what is being represented. In the case of autonomous driving those classes are usually car, pedestrian, traffic sign.

Machine learning algorithms or models for multi-class object detection, MCOD, takes as input an image and gives as output a detection, position and a coarse classification of the several objects present in the input frame.

The advantage of the presented method is the performance improvement achieved in the training of the machine learning algorithm or model 22, when the data for training are selected with the method explained here.

The method can be divided in two steps: a preselection step 38 where the frame uncertainty is determined and a selection step 42 wherein a diversity sampling is used to select the most diverse K images or frames of the total N images or frames pre-selected in the pre-selection step 38. The K training frames form a subset of the total N pre-selected frames.

In the following preferred embodiments are described.

Step 1 - Preselection step:

At the beginning N frames with the highest uncertainty based on network performance are used. The implementation is based on the direct output of the machine learning algorithm (softmax) without computing overhead. If the active learning process is to be applied for a semantic segmentation (e.g. SemSeg) algorithm, then the average entropy of the output pixels is used. If the active learning method is to be applied for a multi-class object detection algorithm (MCOD), then an average or max values or a sum of the entropy of the classification output of the single shot detector after the non-maximum suppression is used.

The uncertainty score usually finds frame where there is an uncertainty on one or more object detection (in case of MCOD) or on one or more pixel-classes (in the case of semantic segmentation).

In the case of MCOD, the biggest problem in evaluating uncertainty is how to get from object classes uncertainty to the uncertainty of the entire frame, i.e. how to "aggregate" the uncertainty over the frame. The present invention assigns the maximal object uncertainty on a frame as the frame uncertainty

The output of the preselection step is a set of N frames with the highest uncertainty.

Step 2 - Selection step:

A diversity sampling is applied in order to select the most diverse K images of the total N images preselected in Step 1. The most diverse K images are then a subset of the total N images pre-selected in the preselection step.

The diversity sampling method comprises the following steps:

- Calculating Deep Learning features of all N images at the end of the encoder (in particular for both SemSeg and MCOD respectively),
- Optionally reducing dimensionality of the backbone features by using PCA (principle component analysis),
- Applying K-means clustering on the dimensionality-reduced backbone features of the previous step,
- Choosing the K cluster centers as images for labelling, wherein choosing the cluster center is one possible representation criterion.

Also here an alternative sampling method from the clusters is being investigated (taking the maximum uncertainty example from each cluster as an alternative representation criterion).

One can keep the diversity sampling step general, as different methods with similar performances can be used.

The above described selection step has the advantage that the selection of many frames from the same or very similar scenarios, which would not lead to an optimal performance increase when included into training, is avoided

By performing the steps above the most valuable frames to be labelled are selected.

The frames can be then labelled by a human or automatically. The artificial neural network ANN can be then trained again by using the now labelled data: a considerable improvement in performance is observed

The above method can be used online (for the vehicle 10 in operation) or offline. In this context, online means that the selection of the most promising labelling data is done in real-time (i.e. on the edge or computer network periphery) while the vehicle 10 is driving and recording data by at least one sensor 15 present on the vehicle 10. Offline means that the data is recorded and then added to a big data lake, on which the described algorithm is then run

Overall, the example shows how active learning for a machine learning model can be supported.

## Claims

1. Method for selecting a set of training frames (24) from a plurality of given frames (19) of a frame sequence (18) in an active learning process (21), comprising

   - providing a pre-trained machine learning model (22);
   - performing a respective recognition step (36) for the given frames (19) using the pre-trained model (22) and thereby generating a respective recognition result (37) for each given frame (19);
   - in a pre-selection step (38) calculating a respective uncertainty value (40) for each given frame (19) using the respective recognition result (37) and a predefined uncertainty measure (39) and
   - pre-selecting N given frames (19) whose uncertainty values (40) indicate the highest recognition uncertainty and thereby providing an intermediate set of N pre-selected frames (41); wherein
   - in a selection step (42), selecting the set of K training frames (24) from the N pre-selected frames (41) by performing a predefined diversity sampling that comprises determining predefined fingerprint data (45) for the pre-selected frames (41) by applying a predefined fingerprint function to the respective pre-selected frame (41) and selecting K training frames (24) that provide a combination of fingerprint data (45) that fulfills a predefined diversity criterion (43) indicating that the K training frames (24) are dissimilar according to a predefined measure,

**characterized in that**
the fingerprint function further comprises that the fingerprint data (45) of the respective pre-selected frame (41) comprises a respective geo-position of a recording place of the respective pre-selected frame (41), and the diversity criterion (43) further comprises that the geo-positions of the training frames (24) indicate a spatial distance of the recording places that is larger than a predefined distance threshold and/or the recording places are spatially equidistant.

2. Method according to claim 1, wherein the fingerprint function comprises that the fingerprint data (45) are generated by calculating recognition features (63) of all N pre-selected frames (41) using a feature extraction backbone encoder (62) or by calculating the recognition features (63) and applying a predefined compression algorithm (70) to the recognition features (63) that is designed to reduce a dimensionality of the recognition features (63).

3. Method according to claim 2, wherein the compression algorithm (70) comprises applying a principal component analysis, PCA, to the recognition features (63) and using a pre-defined subset of the PCA coefficients as the fingerprint data (45).

4. Method according to any of the preceding claims, wherein the diversity criterion (43) comprises

   • applying a k-means clustering on the fingerprint data (45) for determining K clusters (71) in a predefined feature space (72),
   • selecting from each of the K clusters (71) a respective representative pre-selected frame (41) that fulfills a predefined representation criterion.

5. Method according to claim 4, wherein the representation criterion comprises that

   • the pre-selected frame (41) that is closest to the cluster (71) center
   or
   • the pre-selected frame (41) with the highest recognition uncertainty in that cluster (71)

is chosen.

6. Method according to any of the preceding claims, wherein the fingerprint function comprises that the fingerprint data (45) of the respective pre-selected fames comprise a respective timestamp of a recording time of that pre-selected frame (41), and the diversity criterion (43) comprises that the timestamps of the training frames (24) indicate a temporal distance of the recording times that is larger than a predefined time threshold and/or the recording times are temporally equidistant.

7. Method according to any of the preceding claims, wherein the recognition result (37) comprises for each given frame (19) at least one probability vector (66) of probability values (68) of a classification output, wherein each probability value (68) indicates a probability of a predefined class (67) being present, in particular softmax values, and the uncertainty measure (39) comprises calculating an entropy value (EV) for each probability vector (66).

8. Method according to claim 7, wherein the uncertainty measure (39) comprises a predefined aggregation function for aggregating the respective entropy value (EV) of the at least one probability vector (66) in each given frame (19).

9. Method according to claim 8, wherein the aggregation function comprises calculating the average or the maximum value or the sum of several entropy values (EV) of the respective frame.

10. Method according to any of the claims 7 to 9, wherein the pre-trained machine learning model (22) is based on a machine learning algorithm (70) for semantic segmentation that provides a pixel-wise classification output such that for each pixel of the given image (60) a probability vector (66) is generated.

11. Method according to any of the claims 7 to 9, wherein the pre-trained machine learning model (22) is based on a machine learning algorithm (70) for object detection, that provides a classification output comprising at least one bounding-box and an associated probability vector (66).

12. Method according to any of the preceding claims, further comprising the steps of

   • labeling the training frames (24) and
   • performing a training of the machine learning model (22) using the labelled training frames (24).

13. Electronic processor circuit (20) for performing a Method according to any of the preceding claims, wherein the processor circuit (20) comprises a tangible storage medium comprising computer readable instructions that cause the processor circuit (20) to perform the method when the instructions are executed by the processor circuit (20).

14. Storage medium for an electronic processor circuit (20) according to claim 13, wherein the computer readable medium stores instructions that cause the processor circuit (20) to perform a method according to claims 1 to 12 when the instructions are executed by the processor circuit (20).

**Patentansprüche**

1. Verfahren zum Auswählen einer Menge von Trainingsrahmen (24) aus einer Vielzahl von gegebenen Rahmen (19) einer Rahmensequenz (18) in einem aktiven Lernprozess (21),, umfassend

   • Bereitstellen eines vortrainierten maschinellen Lernmodells (22);
   • Ausführen eines jeweiligen Erkennungsschritts (36) für die gegebenen Rahmen (19) unter Verwendung des vortrainierten Modells (22) und dadurch Generieren eines jeweiligen Erkennungsergebnisses (37) für jeden gegebenen Rahmen (19);
   • in einem Vorauswahlschritt (38), Berechnen eines jeweiligen Unsicherheitswertes (40) für jeden gegebenen Rahmen (19) unter Verwendung des jeweiligen Erkennungsergebnisses (37) und einer vordefinierten Unsicherheitsmessung (39), und
   • Vorauswählen von N gegebenen Rahmen (19), deren Unsicherheitswerte (40) die größte Erkennungsunsicherheit angeben, und dadurch Bereitstellen einer Zwischenmenge von N vorausgewählten Rahmen (41); wobei
   • in einem Auswahlschritt (42) die Menge von K Trainingsrahmen (24) aus den N vorausgewählten Rahmen (41) ausgewählt wird durch Ausführen einer vordefinierten Diversitätsprobenahme, die das Bestimmen von vordefinierten Fingerabdruckdaten (45) für die vorausgewählten Rahmen (41) umfasst, indem eine vordefinierte Fingerabdruckfunktion auf den jeweiligen vorausgewählten Rahmen (41) angewendet wird, und K Trainingsrahmen (24) ausgewählt werden, die eine Kombination von Fingerabdruckdaten (45) bereitstellen, die ein vordefiniertes Diversitätskriterium (43) erfüllt, das angibt, dass die K Trainingsrahmen (24) gemäß einer vordefinierten Messung unterschiedlich sind,

**dadurch gekennzeichnet, dass** die Fingerabdruckfunktion ferner umfasst, dass die Fingerabdruckdaten (45) des jeweiligen vorausgewählten Rahmens (41) eine jeweilige geographische Position eines Aufzeichnungsortes des jeweiligen vorausgewählten Rahmens (41) umfassen, und das Diversitätskriterium (43) ferner umfasst, dass die geographischen Positionen der Trainingsrahmen (24) einen räumlichen Abstand der Aufzeichnungsorte angeben, der größer als eine vordefinierte Abstandsschwelle ist, und/oder dass die Aufzeichnungsorte räumlich äquidistant sind.

2. Verfahren nach Anspruch 1, wobei die Fingerabdruckfunktion umfasst, dass die Fingerabdruckdaten (45) durch Berechnen der Erkennungsmerkmale (63) aller N vorausgewählten Rahmen (41) unter Verwendung eines Backbone-Codierers (62) zur Merkmalsextraktion oder durch Berechnen der Erkennungsmerkmale (63) und durch Anwenden auf die Erkennungsmerkmale (63) eines vordefinierten Kompressionsalgorithmus (70), der dazu ausgelegt ist, eine Dimensionalität der Erkennungsmerkmale (63) zu reduzieren, generiert werden.

3. Verfahren nach Anspruch 2, wobei der Kompressionsalgorithmus (70) das Anwenden einer Hauptkomponentenanalyse, PCA, auf die Erkennungsmerkmale (63) und das Verwenden einer vordefinierten Teilmenge der PCA-Koeffizienten als Fingerabdruckdaten (45) umfasst.

4. Verfahren nach einem der vorhergehenden Ansprüche, wobei das Diversitätskriterium (43) umfasst

   • Anwenden einer k-means-Clusterbildung auf die Fingerabdruckdaten (45), um K Cluster (71) in einem vordefinierten Merkmalsraum (72) zu bestimmen,
   • Auswählen aus jeder der K Cluster (71) eines jeweiligen repräsentativen vorausgewählten Rahmens (41), der ein vordefiniertes Repräsentationskriterium erfüllt.

5. Verfahren nach Anspruch 4, wobei das Repräsentationskriterium umfasst, dass

   • der vorausgewählte Rahmen (41), der dem Zentrum des Clusters (71) am nächsten ist, oder
   • der vorausgewählte Rahmen (41) mit der größten Erkennungsunsicherheit in diesem Cluster (71)
ausgewählt wird.

6. Verfahren nach einem der vorhergehenden Ansprüche, wobei die Fingerabdruckfunktion umfasst, dass die Fingerabdruckdaten (45) der jeweiligen vorausgewählten Rahmen einen jeweiligen Zeitstempel einer Aufzeichnungszeit dieses vorausgewählten Rahmens (41) umfassen, und das Diversitätskriterium (43) umfasst, dass die Zeitstempel der Trainingsrahmen (24) einen zeitlichen Abstand der Aufzeichnungszeiten angeben, der größer als eine vordefinierte Zeitschwelle ist, und/oder dass die Aufzeichnungszeiten zeitlich äquidistant sind.

7. Verfahren nach einem der vorhergehenden Ansprüche, wobei das Erkennungsergebnis (37) für jeden gegebenen Rahmen (19) mindestens einen Wahrscheinlichkeitsvektor (66) von Wahrscheinlichkeitswerten (68) einer Klassifizierungsausgabe umfasst, wobei jeder Wahrscheinlichkeitswert (68) eine Wahrscheinlichkeit angibt, dass eine vordefinierte Klasse (67), insbesondere Softmax-Werte, vorhanden ist und die Unsicherheitsmessung (39) das Berechnen eines Entropiewertes (EV) für jeden Wahrscheinlichkeitsvektor (66) umfasst.

8. Verfahren nach Anspruch 7, wobei die Unsicherheitsmessung (39) eine vordefinierte Aggregationsfunktion zum Aggregieren des jeweiligen Entropiewertes (EV) des mindestens einen Wahrscheinlichkeitsvektors (66) in jedem gegebenen Rahmen (19) umfasst.

9. Verfahren nach Anspruch 8, wobei die Aggregationsfunktion das Berechnen des Mittelwertes oder des Höchstwertes oder der Summe mehrerer Entropiewerte (EV) des jeweiligen Rahmens umfasst.

10. Verfahren nach einem der Ansprüche 7 bis 9, wobei das vortrainierte maschinelle Lernmodell (22) auf einem maschinellen Lernalgorithmus (70) zur semantischen Segmentierung basiert, der eine pixelweise Klassifizierungsausgabe bereitstellt, so dass für jedes Pixel des gegebenen Bildes (60) ein Wahrscheinlichkeitsvektor (66) generiert wird.

11. Verfahren nach einem der Ansprüche 7 bis 9, wobei das vortrainierte maschinelle Lernmodell (22) auf einem maschinellen Lernalgorithmus (70) für die Objektdetektion basiert, der eine Klassifizierungsausgabe bereitstellt, die mindestens einen Begrenzungsrahmen und einen dazugehörigen Wahrscheinlichkeitsvektor (66) umfasst.

12. Verfahren nach einem der vorhergehenden Ansprüche, ferner umfassend folgende Schritte

   • Markieren der Trainingsrahmen (24), und
   • Ausführen eines Trainings des maschinellen Lernmodells (22) unter Verwendung der markierten Trainingsrahmen (24).

13. Elektronische Prozessorschaltung (20) zum Ausführen eines Verfahrens nach einem der vorhergehenden Ansprüche, wobei die Prozessorschaltung (20) ein greifbares Speichermedium umfasst, das computerlesbare Anweisungen umfasst, die bewirken, dass die Prozessorschaltung (20) das Verfahren ausführt, wenn die Anweisungen von der Prozessorschaltung (20) ausgeführt werden.

14. Speichermedium für eine elektronische Prozessorschaltung (20) nach Anspruch 13, wobei das computerlesbare Medium Anweisungen speichert, die bewirken, dass die Prozessorschaltung (20) ein Verfahren nach Anspruch 1 bis 12 ausführt, wenn die Anweisungen von der Prozessorschaltung (20) ausgeführt werden.

## Revendications

1. Procédé permettant de sélectionner un ensemble de trames d'entraînement (24) parmi une pluralité de trames données (19) d'une séquence de trames (18) dans un processus d'apprentissage actif (21), comprenant les étapes consistant à

   • fournir un modèle d'apprentissage machine pré-entraîné (22) ;
   • effectuer une étape de reconnaissance (36) respective pour les trames données (19) en utilisant le modèle pré-entraîné (22) et générer ainsi un résultat de reconnaissance (37) respectif pour chaque trame donnée (19) ;
   • dans une étape de présélection (38), calculer une valeur d'incertitude (40) respective pour chaque trame donnée (19) en utilisant le résultat de reconnaissance (37) respectif et une mesure d'incertitude prédéfinie (39), et
   • présélectionner N trames données (19) dont les valeurs d'incertitude (40) indiquent la plus haute incertitude de reconnaissance, et fournir ainsi un ensemble intermédiaire de N trames présélectionnées (41) ; dans lequel
   • dans une étape de sélection (42), l'ensemble de K trames d'entraînement (24) parmi les N trames présélectionnées (41) est sélectionné en effectuant un échantillonnage à diversité prédéfini qui comprend la détermination de données d'empreinte digitale prédéfinies (45) pour les trames présélectionnées (41) en appliquant une fonction d'empreinte digitale prédéfinie à la trame présélectionnée (41) respective et en sélectionnant K trames d'entraînement (24) qui fournissent une combinaison de données d'empreinte digitale (45) qui satisfait un critère de diversité prédéfini (43) indiquant que les K trames d'entraînement (24) sont différentes selon une mesure prédéfinie,

   **caractérisé en ce que** la fonction d'empreinte digitale comprend en outre le fait que les données d'empreinte digitale (45) de la trame présélectionnée respective (41) comprennent une position géographique respective d'un emplacement d'enregistrement de la trame présélectionnée (41) respective, et le critère de diversité (43) comprend en outre le fait que les positions géographiques des trames d'entraînement (24) indiquent une distance spatiale des emplacements d'enregistrement qui est supérieure à un seuil de distance prédéfini et/ou que les emplacements d'enregistrement sont équidistants dans l'espace.

2. Procédé selon la revendication 1, dans lequel la fonction d'empreinte digitale comprend le fait que les données d'empreinte digitale (45) sont générées en calculant des caractéristiques de reconnaissance (63) de toutes les N trames présélectionnées (41) en utilisant un codeur dorsal d'extraction de caractéristique (62) ou en calculant les caractéristiques de reconnaissance (63) et en appliquant un algorithme de compression prédéfini (70) aux caractéristiques de reconnaissance (63) qui est conçu pour réduire une dimensionnalité des caractéristiques de reconnaissance (63).

3. Procédé selon la revendication 2, dans lequel l'algorithme de compression (70) comprend l'application d'une analyse en composantes principales, PCA, aux caractéristiques de reconnaissance (63) et l'utilisation d'un sous-ensemble prédéfini des coefficients PCA comme données d'empreinte digitale (45).

4. Procédé selon l'une quelconque des revendications précédentes, dans lequel le critère de diversité (43) comprend

   • l'application d'un regroupement de k moyennes aux données d'empreinte digitale (45) pour déterminer K grappes (71) dans un espace de caractéristiques prédéfini (72),
   • sélectionner parmi chacune des K grappes (71) une trame présélectionnée représentative (41) respective qui satisfait un critère de représentation prédéfini.

5. Procédé selon la revendication 4, dans lequel le critère de représentation comprend le choix

   • de la trame présélectionnée (41) qui est la plus proche du centre de la grappe (71), ou
   • de la trame présélectionnée (41) ayant la plus grande incertitude de reconnaissance dans cette grappe (71).

6. Procédé selon l'une quelconque des revendications précédentes, dans lequel la fonction d'empreinte digitale comprend le fait que les données d'empreinte digitale (45) des trames présélectionnées respectives comprennent un horodatage respectif d'une heure d'enregistrement de cette trame présélectionnée (41), et le critère de diversité (43) comprend le fait que les horodatages des trames d'entraînement (24) indiquent une distance temporelle des heures d'enregistrement qui est supérieure à un seuil de temps prédéfini et/ou que les heures d'enregistrement sont équidistantes dans le temps.

7. Procédé selon l'une quelconque des revendications précédentes, dans lequel le résultat de reconnaissance (37) comprend pour chaque trame donnée (19) au moins un vecteur de probabilité (66) des valeurs de probabilité (68) d'une sortie de classification, chaque valeur de probabilité (68) indiquant une probabilité qu'une classe prédéfinie (67) présente, en particulier des valeurs softmax, et la mesure d'incertitude (39) comprend le calcul d'une valeur d'entropie (EV) pour chaque vecteur de probabilité (66).

8. Procédé selon la revendication 7, dans lequel la mesure d'incertitude (39) comprend une fonction d'agrégation prédéfinie pour agréger la valeur d'entropie (EV) respective dudit au moins un vecteur de probabilité (66) dans chaque trame donnée (19).

9. Procédé selon la revendication 8, dans lequel la fonction d'agrégation comprend le calcul de la moyenne ou de la valeur maximale ou de la somme de plusieurs valeurs d'entropie (EV) de la trame respective.

10. Procédé selon l'une quelconque des revendications 7 à 9, dans lequel le modèle d'apprentissage machine pré-entraîné (22) est basé sur un algorithme d'apprentissage machine (70) pour une segmentation sémantique qui fournit une sortie de classification pixel par pixel de sorte qu'un vecteur de probabilité (66) est généré pour chaque pixel de l'image donnée (60).

11. Procédé selon l'une quelconque des revendications 7 à 9, dans lequel le modèle d'apprentissage machine pré-entraîné (22) est basé sur un algorithme d'apprentissage machine (70) pour une détection d'objet qui fournit une sortie de classification comprenant au moins un cadre de contour et un vecteur de probabilité (66) associé.

12. Procédé selon l'une quelconque des revendications précédentes, comprenant en outre les étapes consistant à

   • étiqueter les trames d'entraînement (24), et
   • effectuer un entraînement du modèle d'apprentissage machine (22) en utilisant les trames d'entraînement (24) étiquetées.

**13.** Circuit de processeur électronique (20) permettant d'effectuer un procédé selon l'une quelconque des revendications précédentes, le circuit de processeur (20) comprenant un support de stockage tangible comprenant des instructions lisibles par ordinateur qui font que le circuit de processeur (20) effectue le procédé lorsque les instructions sont exécutées par le circuit de processeur (20).

**14.** Support de stockage pour un circuit de processeur électronique (20) selon la revendication 13, dans lequel le support lisible par ordinateur stocke des instructions qui font que le circuit de processeur (20) effectue un procédé selon les revendications 1 à 12 lorsque les instructions sont exécutées par le circuit de processeur (20).

Fig.1

EP 4 356 353 B1

Fig.2

EP 4 356 353 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 10748035 B